# EUROPEAN PATENT APPLICATION

(11) **EP 4 460 120 A1**
(43) Date of publication of application: **06.11.2024**
(21) Application number: 21969464.3
(22) Date of filing: 29.12.2021
(51) Int. Cl.: H04W 72/04

(54) **INTERFERENCE COORDINATION METHOD, APPARATUS, AND STORAGE MEDIUM**

(71) Applicant: Beijing Xiaomi Mobile Software Co., Ltd., Beijing 100085 (CN)
(72) Inventor: ZHAO, Qun, Beijing 100085 (CN)
(74) Representative: Dehns Germany Partnerschaft mbB
(86) International application number: PCT/CN2021/142629
(87) International publication number: WO 2023/123096

(57) **Abstract**

Provided are an interference coordination method, an apparatus, and a storage medium. The interference coordination method comprises: determining a cell group to which a first base station belongs, wherein cross-link interference coordination needs to be carried out among the base stations belonging to the same cell group; executing a full-duplex operation on the basis of target configuration information, wherein the target configuration information is used to indicate the configuration information when multiple base stations in the cell group to which the first base station belongs execute the full-duplex operation. With the present invention, strong cross-link interference between base stations belonging to a same cell group can be avoided, and the purpose of coordinating cross-link interference can be realized on the base station side.

## Description

### TECHNICAL FIELD

The present disclosure relates to the field of communication, and in particular, to an interference coordination method and apparatus, and a storage medium.

### BACKGROUND

In Rel-18 (Release 18), possible full-duplex solutions are discussed. At present, 3GPP (3rd Generation Partnership Project) determines that full-duplex enhancement in Rel-18 is only directed to base stations.

However, when base station sides adopt a full-duplex mechanism, there may be strong cross-link interference between base stations, and measurement for cross-link interference is currently limited to only terminal sides.

### SUMMARY

In order to solve problems in related arts, embodiments of the present disclosure provide an interference coordination method and apparatus, and a storage medium.

According to a first aspect of embodiments of the present disclosure, an interference coordination method is provided, where the method is performed by a first base station, and the method includes:
determining a cell group to which the first base station belongs; where cross-link interference coordination needs to be performed between base stations belonging to the same cell group;
performing a full-duplex operation based on target configuration information; where the target configuration information is used to indicate configuration information for the base stations in the cell group to which the first base station belongs to perform the full-duplex operation.

Optionally, determining the cell group to which the first base station belongs includes:
determining a first associated base station; where the first associated base station is a base station among second base stations, a cross-link interference value between the first associated base station and the first base station is greater than or equal to an interference threshold, and the second base stations are neighboring base stations of the first base station;
sending a first associated cell list to the second base stations; where the first associated cell list includes a cell corresponding to the first base station and a first associated cell corresponding to the first associated base station;
receiving second associated cell lists sent by the second base stations; wherein for each of the second associated cell lists, the second associated cell list comprises a cell corresponding to one of the second base stations and a second associated cell corresponding to a second associated base station, the second associated base station is a base station among neighboring base stations of the one of the second base stations, and a cross-link interference value between the second associated base station and the one of the second base stations is greater than or equal to the interference threshold;
after traversing the cells corresponding to the second base stations, determining a target associated cell list by combining the first associated cell list and the second associated cell lists; and
determining the cell group to which the first base station belongs based on the target associated cell list in which the cell corresponding to the first base station is located.

Optionally, traversing the cells corresponding to the second base stations includes any one of:
traversing the cells corresponding to the second base stations based on an ascending order of cell identifiers; or
traversing the cells corresponding to the second base stations based on a descending order of cell identifiers.

Optionally, the method further includes:
measuring first reference signal receiving power (RSRP) values of downlink reference signals sent by the second base stations to terminals;
determining the first associated base station includes:
   determining the second base station with the first RSRP value greater than or equal to the interference threshold as the first associated base station.

Optionally, the method further includes any one of:
determining the interference threshold based on a protocol agreement;
determining the interference threshold based on configuration information used to configure the interference threshold sent by a core network device; or
configuring the interference threshold through radio resource control (RRC) signaling.

Optionally, the method further includes:
sending first candidate configuration information to a third base station; where the third base station is a base station belonging to the same cell group as the first base station, and the first candidate configuration information is used to indicate configuration information of a full-duplex operation expected to be performed by the first base station;
receiving second candidate configuration information sent by the third base station; where the second candidate configuration information is used to indicate configuration information of a full-duplex operation expected to be performed by the third base station; and
receiving the target configuration information sent by a specified base station; where the specified base station is a base station in the cell group to which the first base station belongs with a corresponding cell identifier satisfying a specified condition.

Optionally, the method further includes:
sending first candidate configuration information to a third base station; where the third base station is a base station belonging to the same cell group as the first base station, and the first candidate configuration information is used to indicate configuration information of a full-duplex operation expected to be performed by the first base station;
receiving second candidate configuration information sent by the third base station; where the second candidate configuration information is used to indicate configuration information of a full-duplex operation expected to be performed by the third base station;
in response to determining a cell identifier corresponding to the first base station satisfies a specified condition, determining the target configuration information based on the first candidate configuration information and the second candidate configuration information; and
sending the target configuration information to the third base station.

Optionally, the specified condition is that the cell identifier corresponding to the base station is maximum, or the cell identifier corresponding to the base station is minimum.

Optionally, the first candidate configuration information includes at least one of:
first uplink sub-band information of a full-duplex operation expected to be performed by the first base station;
a first RSRP list, where the first RSRP list includes a first RSRP value determined by the first base station by measuring a downlink reference signal sent by a second base station to a terminal, and the second base station is a neighboring base station of the first base station;
first uplink and downlink time division duplex configuration information of a full-duplex operation expected to be performed by the first base station; or
first transmission direction information of a full-duplex operation expected to be performed by the first base station.

Optionally, the second candidate configuration information includes at least one of:
second uplink sub-band information of a full-duplex operation expected to be performed by the third base station;
a second RSRP list, where the second RSRP list includes a second RSRP value determined by the third base station by measuring a downlink reference signal sent by a neighboring base station of the third base station to a terminal;
second uplink and downlink time division duplex configuration information of a full-duplex operation expected to be performed by the third base station; or
second transmission direction information of a full-duplex operation expected to be performed by the third base station.

Optionally, the target configuration information includes at least one of:
target uplink sub-band information for the base stations in the cell group to which the first base station belongs to perform the full-duplex operation;
target uplink and downlink time division duplex configuration information for the base stations in the cell group to which the first base station belongs to perform the full-duplex operation; or
target transmission direction information for the base stations in the cell group to which the first base station belongs to perform the full-duplex operation.
According to a second aspect of embodiments of the present disclosure, an interference coordination method is provided, where the method is performed by a second base station, and the method includes:
   determining a second associated base station among neighboring base stations of the second base station, where a cross-link interference value between the second associated base station and the second base station is greater than or equal to an interference threshold;
   sending a second associated cell list to a first base station, so that the first base station determines a cell group to which the first base station belongs; where the first base station is a neighboring base station of the second base station, and the second associated cell list includes a cell corresponding to the second base station and a second associated cell corresponding to the second associated base station.

Optionally, the method further includes any one of:
determining the interference threshold based on a protocol agreement;
determining the interference threshold based on configuration information used to configure the interference threshold sent by a core network device; or
configuring the interference threshold through radio resource control (RRC) signaling.

Optionally, the method further includes:
when the second base station and the first base station belong to the same cell group, receiving first candidate configuration information sent by the first base station; where the first candidate configuration information is used to indicate configuration information of a full-duplex operation expected to be performed by the first base station;
sending second candidate configuration information to the first base station; where the second candidate configuration information is used to indicate configuration information of a full-duplex operation expected to be performed by the second base station;
receiving target configuration information sent by a specified base station; where the specified base station is a base station in the cell group to which the first base station belongs with a corresponding cell identifier satisfying a specified condition, and the target configuration information is used to indicate configuration information for base stations in the cell group to which the first base station belongs to perform a full-duplex operation.

Optionally, the method further includes:
when the second base station and the first base station belong to the same cell group, receiving first candidate configuration information sent by the first base station; where the first candidate configuration information is used to indicate configuration information of a full-duplex operation expected to be performed by the first base station;
sending second candidate configuration information to the first base station; where the second candidate configuration information is used to indicate configuration information of a full-duplex operation expected to be performed by the second base station;
in response to determining a cell identifier corresponding to the second base station satisfies a specified condition, determining target configuration information based on the first candidate configuration information and the second candidate configuration information; where the target configuration information is used to indicate configuration information for base stations in the cell group to which the first base station belongs to perform a full-duplex operation; and
sending the target configuration information to at least the first base station.

Optionally, the method further includes:
performing the full-duplex operation based on the target configuration information.

Optionally, the specified condition is that the cell identifier corresponding to the base station is maximum, or the cell identifier corresponding to the base station is minimum.

Optionally, the first candidate configuration information includes at least one of:
first uplink sub-band information of a full-duplex operation expected to be performed by the first base station;
a first reference signal receiving power (RSRP) list, where the first RSRP list includes a first RSRP value determined by the first base station by measuring a downlink reference signal sent by the second base station to a terminal;
first uplink and downlink time division duplex configuration information of a full-duplex operation expected to be performed by the first base station; or
first transmission direction information of a full-duplex operation expected to be performed by the first base station.

Optionally, the second candidate configuration information includes at least one of:
second uplink sub-band information of a full-duplex operation expected to be performed by the second base station;
a second RSRP list, where the second RSRP list includes a second RSRP value determined by the second base station by measuring a downlink reference signal sent by a neighboring base station of the second base station to a terminal;
second uplink and downlink time division duplex configuration information of a full-duplex operation expected to be performed by the second base station; or
second transmission direction information of a full-duplex operation expected to be performed by the second base station.

Optionally, the target configuration information includes at least one of:
target uplink sub-band information for the base stations in the cell group to which the first base station belongs to perform the full-duplex operation;
target uplink and downlink time division duplex configuration information for the base stations in the cell group to which the first base station belongs to perform the full-duplex operation; or
target transmission direction information for the base stations in the cell group to which the first base station belongs to perform the full-duplex operation.

According to a third aspect of embodiments of the present disclosure, an interference coordination apparatus is provided, where the apparatus is applied to a first base station, and the apparatus includes:
a first determining module, configured to determine a cell group to which the first base station belongs; where cross-link interference coordination needs to be performed between base stations belonging to the same cell group;
a first performing module, configured to perform a full-duplex operation based on target configuration information; where the target configuration information is used to indicate configuration information for the base stations in the cell group to which the first base station belongs to perform the full-duplex operation.

According to a fourth aspect of embodiments of the present disclosure, an interference coordination apparatus is provided, where the apparatus is applied to a second base station, and the apparatus includes:
a second determining module, configured to determine a second associated base station among neighboring base stations of the second base station, where a cross-link interference value between the second associated base station and the second base station is greater than or equal to an interference threshold; and
a first sending module, configured to send a second associated cell list to a first base station, so that the first base station determines a cell group to which the first base station belongs; where the first base station is a neighboring base station of the second base station, and the second associated cell list includes a cell corresponding to the second base station and a second associated cell corresponding to the second associated base station.

According to a fifth aspect of embodiments of the present disclosure, a computer-readable storage medium is provided, where the storage medium stores a computer program, and the computer program is used to perform the interference coordination method according to any one of the above method of the first base station side.

According to a sixth aspect of embodiments of the present disclosure, a computer-readable storage medium is provided, where the storage medium stores a computer program, and the computer program is used to perform the interference coordination method according to any one of the above method of the second base station side.

According to a seventh aspect of embodiments of the present disclosure, an interference coordination device is provided, including:
a processor; and
a memory for storing a processor-executable instruction;
where the processor is configured to perform the interference coordination method according to any one of the first base station side.

According to an eighth aspect of embodiments of the present disclosure, an interference coordination device is provided, including:
a processor; and
a memory for storing a processor-executable instruction;
where the processor is configured to perform the interference coordination method according to any one of the second base station side.

The technical solution provided by the embodiments of the present disclosure may include following beneficial effects.

In the embodiments of the present disclosure, the first base station can determine a cell group to which the first base station belongs, and further perform the full-duplex operation based on the target configuration information for the plurality of base stations in the cell group to perform the full-duplex operation. According to the present disclosure, strong cross-link interference between base stations belonging to a same cell group can be avoided, and a purpose of coordinating the cross-link interference is achieved at a base station side.

It should be understood that the above general description and the following detailed description are exemplary and illustrative only and are not intended to limit the present disclosure.

### BRIEF DESCRIPTION OF DRAWINGS

The drawings herein are incorporated in and constitute a part of this specification, illustrating embodiments consistent with the present disclosure, and together with the description serve to explain the principles of the present disclosure.
FIG. 1 is a schematic diagram of an inter-base station cross-link interference scenario according to an exemplary embodiment.
FIG. 2 is a schematic flowchart of an interference coordination method according to an exemplary embodiment.
FIG. 3 is a schematic flowchart of an interference coordination method according to another exemplary embodiment.
FIG. 4 is a schematic flowchart of an interference coordination method according to another exemplary embodiment.
FIG. 5 is a schematic flowchart of an interference coordination method according to another exemplary embodiment.
FIG. 6 is a schematic flowchart of an interference coordination method according to another exemplary embodiment.
FIG. 7 is a schematic flowchart of an interference coordination method according to another exemplary embodiment.
FIG. 8 is a schematic flowchart of an interference coordination method according to another exemplary embodiment.
FIG. 9A is a schematic flowchart of an interference coordination method according to another exemplary embodiment.
FIG. 9B is a schematic drawing of an interference coordination scenario according to an exemplary embodiment.
FIG. 10 is a schematic drawing of an interference coordination scenario according to another exemplary embodiment.
FIG. 11 is a block diagram of an interference coordination apparatus according to an exemplary embodiment.
FIG. 12 is a block diagram of an interference coordination apparatus according to another exemplary embodiment.
FIG. 13 is a schematic structural diagram of an interference coordination device according to an exemplary embodiment of the present disclosure.

### DETAILED DESCRIPTION

Exemplary embodiments will be described in detail herein, examples of which are illustrated in the accompanying drawings. The following description relates to the accompanying drawings, in which same numerals indicate same or similar elements unless otherwise indicated. The embodiments described in the following exemplary embodiments do not represent all embodiments consistent with the present disclosure. Rather, they are merely examples of apparatuses and methods consistent with some aspects of the present disclosure as detailed in the appended claims.

The terminology used in this disclosure is for the purpose of describing particular embodiments only and is not intended to limit the present disclosure. Singular forms "a", "the", and "said" used in this disclosure and the appended claims are also intended to include plural forms unless the context clearly indicates other meanings. It should also be understood that the term "and/or" as used herein refers to and encompasses any one or all possible combinations of at least one associated listed item.

It should be understood that although the terms first, second, third, etc., may be used in the present disclosure to describe various information, such information should not be limited to these terms. These terms are used only to distinguish a same type of information from one another. For example, first information may also be referred to as second information, similarly, the second information may also be referred to as the first information, without departing from the scope of the present disclosure. The term "if' as used herein may be interpreted as "when" or "upon" or "in response to determining" depending on the context.

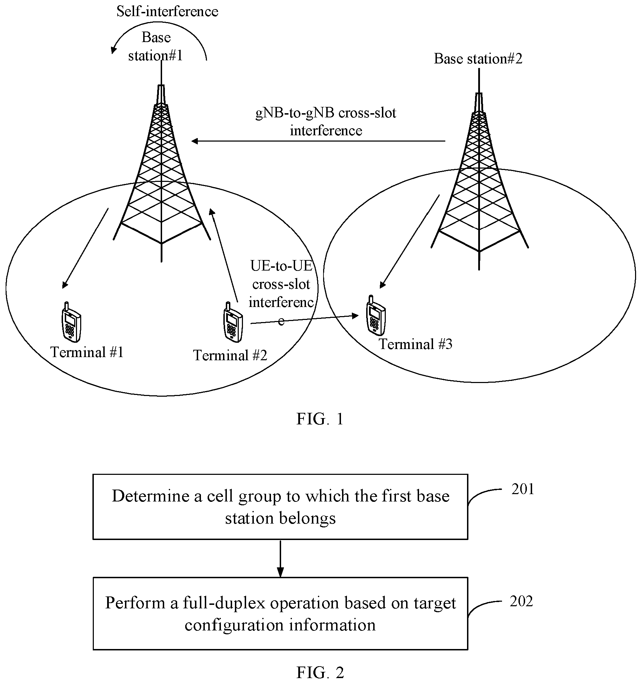

Referring to FIG. 1, both of a base station #1 and a base station #2 perform a full-duplex operation, that is, performing data reception and data transmission simultaneously within a slot. There are multiple types of interference in FIG. 1, including but not limited to at least one of: self-interference between uplink and downlink transmissions from a base station; gNB-to-gNB (base station to base station) cross-link interference from other base stations; UE-to-UE (terminal to terminal) cross-link interference from other terminals.

When the gNB-to-gNB cross-link interference from other base stations is strong, transmission performance of a xDD is greatly affected. In an embodiment of the present disclosure, the xDD may be Time Division Duplex (TDD) or Frequency Division Duplex (FDD).

However, at present, interference measurement is implemented on a terminal side, that is, interference coordination or interference cancellation between base stations cannot be implemented.

In order to solve the above technical problem, the present disclosure provides the following interference coordination method.

The interference coordination method provided by the present disclosure will be first described from a first base station side.

An embodiment of the present disclosure provides an interference coordination method, as shown in FIG. 2, FIG. 2 is a flowchart of an interference coordination method according to an embodiment, where the method may be performed by a first base station. It shall be understood that, the first base station of the present disclosure may be any base station, and the method may include following steps.

In step 201, determining a cell group to which the first base station belongs.

In an embodiment of the present disclosure, cross-link interference coordination needs to be performed between base stations of the same cell group. That is, in order to avoid a strong cross-link interference between base stations, the base stations need to be divided to determine a cell group to which each base station belongs, so as to subsequently perform interference coordination between base stations within the cell group.

In step 202, performing a full-duplex operation based on target configuration information.

In an embodiment of the present disclosure, the target configuration information is used to indicate configuration information for a plurality of base stations in the cell group to which the first base station belongs to perform the full-duplex operation.

In the above embodiment, when the plurality of base stations belonging to the same cell group all use the same target configuration information for full duplex operation, strong cross-link interference between base stations belonging to the same cell group can be avoided, and the purpose of coordinating cross-link interference is realized on the base station side.

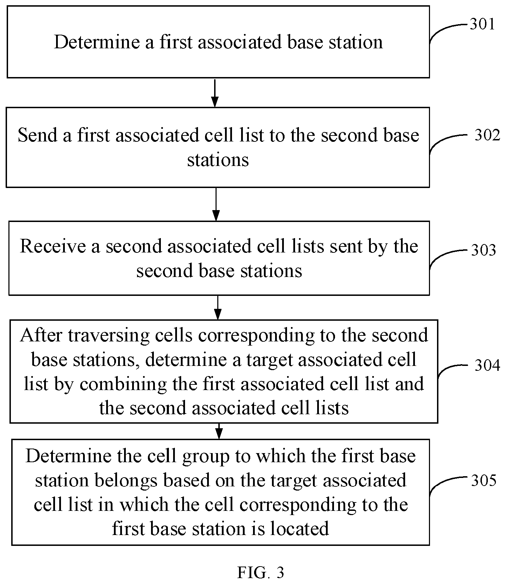

In some optional embodiments, referring to FIG. 3, FIG. 3 is a flowchart of an interference coordination method according to an embodiment, where the method may be performed by a first base station, and the method may include following steps.

In step 301, determining a first associated base station.

In an embodiment of the present disclosure, the first associated base station is a base station among second base stations, a cross-link interference value between the first associated base station and the first base station is greater than or equal to an interference threshold, and the second base stations are neighboring base stations of the first base station. That is, the first base station may determine, from neighboring base stations of the first base station, a base station with a cross-link interference value to the first base station itself being greater than or equal to the interference threshold, and take this base station as the first associated base station.

In a possible implementation, the first base station may measure a first reference signal received power (RSRP) value of a downlink reference signal sent by the second base station to a terminal. The terminal herein refers to a terminal located in a cell corresponding to the second base station. Further, the first base station determines a second base station with a measured first RSRP value being greater than or equal to the interference threshold as the first associated base station.

In step 302, sending a first associated cell list to the second base stations.

In an embodiment of the present disclosure, the first associated cell list includes a cell corresponding to the first base station and a first associated cell corresponding to the first associated base station.

In a possible implementation, an inter-base station interface is provided between the first base station and the second base station, and the first base station may send the first associated cell list to the second base station through the inter-base station interface. The inter-base station interface includes, but is not limited to, an X2 interface or an Xn interface.

In another possible implementation, when there is no inter-base station interface between the first base station and the second base station, the first base station may send the first associated cell list to a core network device through an interface between the first base station and the core network device, and further, the core network device forwards the first associated cell list to the second base station through an interface between the core network device and the second base station.

In step 303, receiving second associated cell lists sent by the second base stations.

In an embodiment of the present disclosure, the second associated cell list includes a cell corresponding to the second base station and a second associated cell corresponding to a second associated base station, the second associated base station is a base station among neighboring base stations of the second base station, and a cross-link interference value between the second associated base station and the second base station is greater than or equal to the interference threshold.

The second base station may determine the second associated base station in a similar manner as the first base station determines the first associated base station, and further, the first base station may receive the second associated cell list from the second base station, where the second associated cell list includes a cell corresponding to the second base station and a second associated cell corresponding to the second associated base station.

In a possible implementation, the first base station directly receives the second associated cell list sent by the second base station to the first base station through an inter-base station interface between the first base station and the second base station.

In another possible implementation, when there is no inter-base station interface between the first base station and the second base station, the first base station receives the second associated cell list sent by a core network device, where the second associated cell list is sent by the second base station to the core network device through an interface with the core network device.

In step 304, after traversing the cells corresponding to the second base stations, determining a target associated cell list by combining the first associated cell list and the second associated cell lists.

In an embodiment of the present disclosure, after traversing a plurality of cells corresponding to neighboring base stations (i.e., second base stations) of the first base station, the first associated cell list and the received second associated cell lists are combined to obtain the target associated cell list. Combining lists refers to perform union operation to cells in the lists. For example, a base station #n (n is a positive integer) represents cells corresponding to the base station, the first associated cell list includes {base station #1, base station #2}, the second associated cell list includes {base station #1, base station #3}, and the combined target associated cell list is {base station #1, base station #2, base station #3 }.

In a possible implementation, cells corresponding to the second base stations may be traversed in an ascending order of cell identifiers.

In another possible implementation, cells corresponding to the second base stations may be traversed in a descending order of cell identifiers.

The above is only an exemplary description, and in practical applications, the cells corresponding to the second base stations may also be traversed in other manners, which is not limited in the present disclosure.

In step 305, determining the cell group to which the first base station belongs based on the target associated cell list in which the cell corresponding to the first base station is located.

In an embodiment of the present disclosure, assuming that the target associated cell list is {base station #1, base station #2, base station #3 }, and the first base station is base station #1, it may be determined that a cell group to which the first base station belongs is a group 1, and the group 1 includes cells corresponding to the base station #1, the base station #2, and the base station #3.

Through the above process, base stations with the strong cross-link interference can be divided into a same cell group, so as to subsequently perform interference coordination on the base stations belonging to the same cell group.

It should also be noted that the above steps 301 to 305 may be separately implemented, so as to implement determining a base station with a strong cross-link interference with the first base station. Alternatively, step 301 to step 305 may be implemented together with the above step 202 (not shown in FIG. 3), that is, after determining a cell group to which each base station belongs, base stations belonging to a same cell group perform a full-duplex operation based on target configuration information, thereby avoiding a strong cross-link interference between the base stations belonging to the same cell group.

In the above embodiment, the first base station may determine the first associated base station with a strong cross-link interference to the first base station, and exchange, between the first base station and the adjacent base station of the first base station, the first associated cell list and the second associated cell list that are respectively determined, and after neighboring cells are traversed, combine the plurality of associated cell lists to determine the cell group to which the first base station belongs, thereby achieving the purpose of determining the base station having a strong cross-link interference with the first base station, which has high applicability. In some optional embodiments, the first base station may determine the interference threshold in any one of the following manners.

In a first manner, the interference threshold is determined based on a protocol agreement.

In an embodiment of the present disclosure, the interference threshold may be agreed in the protocol, so that the first base station determines, in the neighboring base stations (i.e., the second base stations) of the first base station, the first associated base station with a strong cross-link interference.

In a second manner, the interference threshold is determined based on configuration information used to configure the interference threshold sent by a core network device.

In an embodiment of the present disclosure, the interference threshold may be configured by the core network device. The first base station determines the interference threshold based on the configuration information sent by the core network device. Therefore, the first associated base station with a strong cross-link interference is determined in neighboring base stations (i.e., second base stations) of the first base station.

In a third manner, the interference threshold is configured through radio resource control (RRC) signaling.

In an embodiment of the present disclosure, the interference threshold can be configured by the first base station itself.

In a possible implementation, the interference threshold may be configured by using RRC (Radio Resource Control) signaling.

In the above embodiment, the first base station may determine the interference threshold in multiple manners, so as to determine, in the neighboring base stations of the first base station, the first associated base station with a cross-link interference value greater than or equal to the interference threshold, which is easy to be implemented and has high applicability.

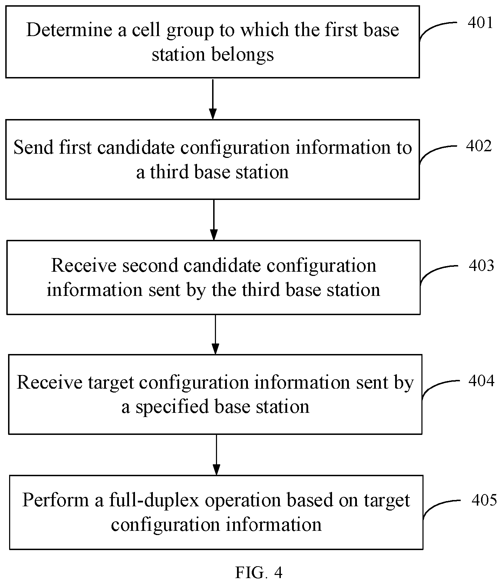

In some optional embodiments, referring to FIG. 4, FIG. 4 is a flowchart of an interference coordination method according to an embodiment, where the method may be performed by a first base station, and the method may include following steps.

In step 401, determining a cell group to which the first base station belongs.

In an embodiment of the present disclosure, cross-link interference coordination needs to be performed between base stations of the same cell group. That is, in order to avoid a strong cross-link interference between base stations, the base stations need to be divided to determine a cell group to which each base station belongs, so as to subsequently perform interference coordination between base stations within the cell group.

In step 402, sending first candidate configuration information to a third base station.

In an embodiment of the present disclosure, the third base station is a base station belonging to the same cell group as the first base station, that is, the third base station is a base station with a strong cross-link interference to the first base station in neighboring base stations of the first base station. The first candidate configuration information is used to indicate configuration information of a full-duplex operation expected to be performed by the first base station.

In a possible implementation, the first candidate configuration information may include, but is not limited to, at least one of: first UL sub-band (UpLink sub-band) information of a full-duplex operation expected to be performed by the first base station; a first RSRP list, where the first RSRP list includes a first RSRP value determined by the first base station by measuring a downlink reference signal sent by the second base station to a terminal, and the second base station is a neighboring base station of the first base station; first UL/DL TDD configuration (UpLink/DownLink Time-Division Duplex configuration) information of a full-duplex operation expected to be performed by the first base station; and first transmission direction information of a full-duplex operation expected to be performed by the first base station.

In step 403, receiving second candidate configuration information sent by the third base station.

In the embodiments of the present disclosure, the second candidate configuration information is used to indicate configuration information of a full-duplex operation expected to be performed by the third base station.

In a possible implementation, the second candidate configuration information includes but is not limited to at least one of: second uplink sub-band information of a full-duplex operation expected to be performed by the third base station; a second RSRP list, where the second RSRP list includes a second RSRP value determined by the third base station by measuring a downlink reference signal sent by a neighboring base station of the third base station to the terminal; second uplink and downlink time division duplex configuration information of the full-duplex operation expected to be performed by the third base station; and second transmission direction information of the full-duplex operation expected to be performed by the third base station.

In step 404, receiving target configuration information sent by a specified base station.

The specified base station is a base station in the cell group to which the first base station belongs with a cell identifier corresponding to the base station meets a specified condition, and a cell corresponding to the specified base station may be taken as an anchor cell. By exchanging configuration information of the full-duplex operation expected to be performed by respective base stations between base stations belonging to the same cell group, the target configuration information is determined by the specified base station in the cell group.

In a possible implementation, the specified condition is that a cell identifier corresponding to the base station is maximum.

In another possible implementation, the specified condition is that a cell identifier corresponding to the base station is minimum.

Certainly, the specified condition may also be other conditions, which is not limited in the present disclosure.

In a possible implementation, the target configuration information includes but is not limited to at least one of: target uplink sub-band information when multiple base stations in the cell group to which the first base station belongs perform the full-duplex operation; target uplink and downlink time division duplex configuration information when multiple base stations in the cell group to which the first base station belongs perform the full-duplex operation; or target transmission direction information when multiple base stations in the cell group to which the first base station belongs perform the full-duplex operation.

In step 405, performing a full-duplex operation based on target configuration information.

In the embodiments of the present disclosure, the first base station performs the full-duplex operation based on the received target configuration information.

In the above embodiment, the first base station may exchange configuration information of the full-duplex operation expected to be performed with a third base station belonging to a same cell group, and target configuration information is determined by a specified base station in the cell group, and further, a plurality of base stations in the cell group may perform full-duplex operation based on the target configuration information. Strong cross-link interference between base stations belonging to a same cell group can be avoided, and a purpose of coordinating the cross-link interference is achieved at a base station side.

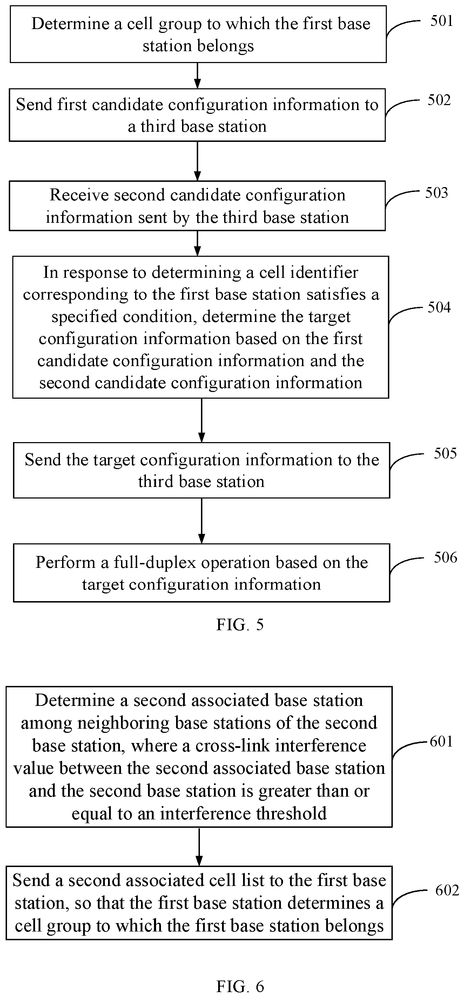

In some optional embodiments, referring to FIG. 5, FIG. 5 is a flowchart of an interference coordination method according to an embodiment, where the method may be performed by a first base station, and the method may include following steps.

In step 501, determining a cell group to which the first base station belongs.

In an embodiment of the present disclosure, cross-link interference coordination needs to be performed between base stations of the same cell group. That is, in order to avoid a strong cross-link interference between base stations, the base stations need to be divided to determine a cell group to which each base station belongs, so as to subsequently perform interference coordination between base stations within the cell group.

In step 502, sending first candidate configuration information to a third base station.

In an embodiment of the present disclosure, the third base station is a base station belonging to the same cell group as the first base station, that is, the third base station is a base station with a strong cross-link interference to the first base station in neighboring base stations of the first base station. The first candidate configuration information is used to indicate configuration information of a full-duplex operation expected to be performed by the first base station.

In a possible implementation, the first candidate configuration information may include, but is not limited to, at least one of: first UpLink sub-band information of a full-duplex operation expected to be performed by the first base station; a first RSRP list, where the first RSRP list includes a first RSRP value determined by the first base station by measuring a downlink reference signal sent by the second base station to a terminal, and the second base station is a neighboring base station of the first base station; first uplink/downlink time-division duplex configuration information of a full-duplex operation expected to be performed by the first base station; and first transmission direction information of a full-duplex operation expected to be performed by the first base station.

In step 503, receiving second candidate configuration information sent by the third base station.

In the embodiments of the present disclosure, the second candidate configuration information is used to indicate configuration information of a full-duplex operation expected to be performed by the third base station.

In a possible implementation, the second candidate configuration information includes but is not limited to at least one of: second uplink sub-band information of a full-duplex operation expected to be performed by the third base station; a second RSRP list, where the second RSRP list includes a second RSRP value determined by the third base station by measuring a downlink reference signal sent by a neighboring base station of the third base station to the terminal; second uplink and downlink time division duplex configuration information of the full-duplex operation expected to be performed by the third base station; and second transmission direction information of the full-duplex operation expected to be performed by the third base station.

In step 504, in response to determining a cell identifier corresponding to the first base station satisfies a specified condition, determining the target configuration information based on the first candidate configuration information and the second candidate configuration information.

In a possible implementation, the specified condition is that a cell identifier corresponding to the base station is maximum.

In another possible implementation, the specified condition is that a cell identifier corresponding to the base station is minimum.

Certainly, the specified condition may also be other conditions, which is not limited in the present disclosure.

In this embodiment of the present disclosure, the cell identifier corresponding to the first base station meets the specified condition, that is, the first base station may serve as the specified base station in the cell group, so that the target configuration information may be determined based on the first candidate configuration information and the second candidate configuration information that are previously interacted between the first base station and the third base station.

In this embodiment of the present disclosure, the first base station may be taken as the specified base station, the corresponding cell may be taken as the anchor cell, the first base station may determine the configuration information of the full-duplex operation expected to be performed by any base station belonging to the same cell group as the target configuration information, or the first base station may determine the configuration information of the full-duplex operation expected to be performed by the first base station itself as the target configuration information, or the target configuration information determined by the first base station is different from the configuration information of the full-duplex operation expected to be performed by any base station in the cell group, which is not limited in the present disclosure.

In a possible implementation, the target configuration information includes but is not limited to at least one of: target uplink sub-band information when multiple base stations in the cell group to which the first base station belongs perform the full-duplex operation; target uplink and downlink time division duplex configuration information when multiple base stations in the cell group to which the first base station belongs perform the full-duplex operation; or target transmission direction information when multiple base stations in the cell group to which the first base station belongs perform the full-duplex operation.

In step 505, sending the target configuration information to the third base station.

In the embodiment of the present disclosure, after the first base station is taken as the specified base station and determines the target configuration information, the first base station may send the target configuration information to the third base station belonging to the same cell group.

In a possible implementation, the first base station sends the target configuration information to the third base station through an interface therebetween.

In another possible implementation, the first base station forwards the target configuration information to the third base station through a core network device.

In step 506, performing a full-duplex operation based on the target configuration information.

In the embodiments of the present disclosure, the first base station performs the full-duplex operation based on the target configuration information.

In the above embodiment, the first base station may exchange configuration information of the full-duplex operation expected to be performed with a third base station belonging to a same cell group, and when the first base station is taken as the specified base station in the cell group, the target configuration information is determined by the first base station, and further, a plurality of base stations in the cell group may perform full-duplex operation based on the target configuration information. Strong cross-link interference between base stations belonging to a same cell group can be avoided, and a purpose of coordinating the cross-link interference is achieved at a base station side.

The interference coordination method provided by the present disclosure will then be described from a second base station side.

An embodiment of the present disclosure provides an interference coordination method, as shown in FIG. 6, FIG. 6 is a flowchart of an interference coordination method according to an embodiment, where the method may be performed by a second base station. It shall be understood that, the second base station of the present disclosure may be any neighboring base station of the first base station, and the method may include following steps.

In step 601, determining a second associated base station among neighboring base stations of the second base station, where a cross-link interference value between the second associated base station and the second base station is greater than or equal to an interference threshold.

In the embodiment of the present disclosure, the second base station may determine, in the neighboring base stations of the second base station, a base station having a strong cross-link interference value with the second base station as the second associated base station.

The second base station may determine the interference threshold in any one of the following manners.

In a first manner, the interference threshold is determined based on a protocol agreement.

In an embodiment of the present disclosure, the interference threshold may be agreed in the protocol, so that the second base station determines, in the neighboring base stations of the second base station, the second associated base station with a strong cross-link interference.

In a second manner, the interference threshold is determined based on configuration information used to configure the interference threshold sent by a core network device.

In an embodiment of the present disclosure, the interference threshold may be configured by the core network device. The second base station determines the interference threshold based on the configuration information sent by the core network device. Therefore, the second associated base station with a strong cross-link interference is determined in neighboring base stations of the second base station.

In a third manner, the interference threshold is configured through radio resource control (RRC) signaling.

In an embodiment of the present disclosure, the interference threshold can be configured by the second base station itself.

In a possible implementation, the interference threshold may be configured through RRC signaling.

In step 602, sending a second associated cell list to the first base station, so that the first base station determines a cell group to which the first base station belongs.

The first base station is a neighboring base station of the second base station, and the second associated cell list includes a cell corresponding to the second base station and a second associated cell corresponding to the second associated base station. After receiving the second associated cell list sent by the second base station, and traversing the plurality of neighboring base stations of the first base station, the first base station may combine the first associated cell list and the second associated cell list determined by the first base station itself, to obtain a target associated cell list, and determine, based on the target associated cell list, a cell group to which the first base station belongs.

In a possible implementation, if an inter-base station interface is provided between the first base station and the second base station, the second base station may send the second associated cell list to the first base station directly through the inter-base station interface.

In another possible implementation, if no inter-base station interface is provided between the first base station and the second base station, the second base station may forward the second associated cell list to the first base station directly through a core network device.

In the above embodiment, the second base station may determine a second associated base station having a cross-link interference value with the second base station being greater than or equal to the interference threshold, and then send the second associated cell list to the first base station, so that the first base station determines a cell group to which the first base station belongs, and subsequently cross-link interference coordination may be performed on base stations in the same cell group, which is easy to implement and has high applicability.

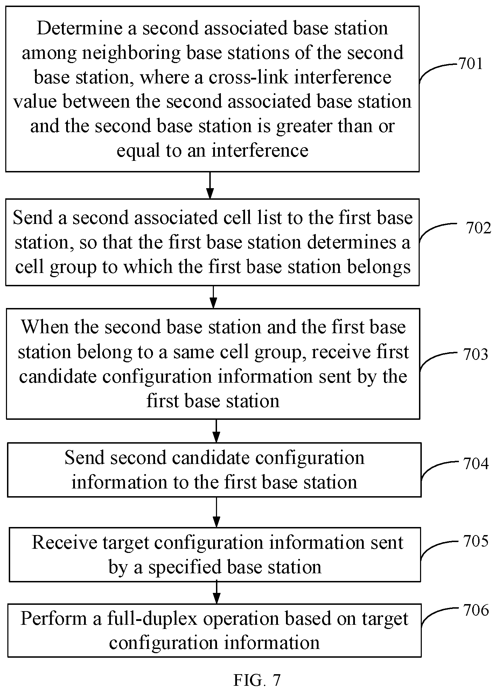

In some optional embodiments, referring to FIG. 7, FIG. 7 is a flowchart of an interference coordination method according to an embodiment, where the method may be performed by a second base station, and the method may include following steps.

In step 701, determining a second associated base station among neighboring base stations of the second base station, where a cross-link interference value between the second associated base station and the second base station is greater than or equal to an interference threshold.

The determining manner is similar to the determining manner of the second associated base station in the above step 601, which will not be repeated here.

In step 702, sending a second associated cell list to the first base station, so that the first base station determines a cell group to which the first base station belongs.

The sending manner is similar to the sending manner of the second associated cell list in the above step 602, which will not be repeated here.

In step 703, when the second base station and the first base station belong to a same cell group, receiving first candidate configuration information sent by the first base station.

In the embodiment of the present disclosure, a manner for the second base station to determine a cell group to which the second base station itself belongs is similar to a manner for the first base station to determine a cell group to which the first base station belongs, which will not be repeated here. If the second base station finally determines that the second base station and the first base station belong to a same cell group, the second base station can receive first candidate configuration information from the first base station, where the first candidate configuration information is used to indicate configuration information of a full-duplex operation expected to be performed by the first base station.

In a possible implementation, the first candidate configuration information may include, but is not limited to, at least one of: first uplink sub-band information of a full-duplex operation expected to be performed by the first base station; a first RSRP list, where the first RSRP list includes a first RSRP value determined by the first base station by measuring a downlink reference signal sent by the second base station to a terminal, and the second base station is a neighboring base station of the first base station; first uplink/downlink time-division duplex configuration information of a full-duplex operation expected to be performed by the first base station; and first transmission direction information of a full-duplex operation expected to be performed by the first base station.

In step 704, sending second candidate configuration information to the first base station.

The second candidate configuration information is used to indicate configuration information of a full-duplex operation expected to be performed by the second base station.

In a possible implementation, the second candidate configuration information includes but is not limited to at least one of: second uplink sub-band information of a full-duplex operation expected to be performed by the third base station; a second RSRP list, where the second RSRP list includes a second RSRP value determined by the third base station by measuring a downlink reference signal sent by a neighboring base station of the third base station to the terminal; second uplink and downlink time division duplex configuration information of the full-duplex operation expected to be performed by the third base station; and second transmission direction information of the full-duplex operation expected to be performed by the third base station.

In step 705, receiving target configuration information sent by a specified base station.

In the embodiment of the present disclosure, the specified base station is a base station in the cell group to which the first base station belongs, and the cell identifier corresponding to the base station meets a specified condition. The target configuration information is used to indicate configuration information for a plurality of base stations in the cell group to which the first base station belongs to perform the full-duplex operation. Since the second base station and the first base station belong to a same cell group, the second base station may receive the target configuration information sent by the specified base station, to subsequently perform the full-duplex operation.

In a possible implementation, the specified condition is that a cell identifier corresponding to the base station is maximum.

In another possible implementation, the specified condition is that a cell identifier corresponding to the base station is minimum.

Certainly, the specified condition may also be other conditions, which is not limited in the present disclosure.

In a possible implementation, the target configuration information includes but is not limited to at least one of: target uplink sub-band information when multiple base stations in the cell group to which the first base station belongs perform the full-duplex operation; target uplink and downlink time division duplex configuration information when multiple base stations in the cell group to which the first base station belongs perform the full-duplex operation; or target transmission direction information when multiple base stations in the cell group to which the first base station belongs perform the full-duplex operation.

In step 706, performing a full-duplex operation based on target configuration information.

In the above embodiment, after receiving the target configuration information sent by the specified base station, the second base station may also perform a full-duplex operation based on the target configuration information, thereby avoiding strong cross-link interference between base stations belonging to a same cell group, and implementing a purpose of coordinating cross-link interference on a base station side.

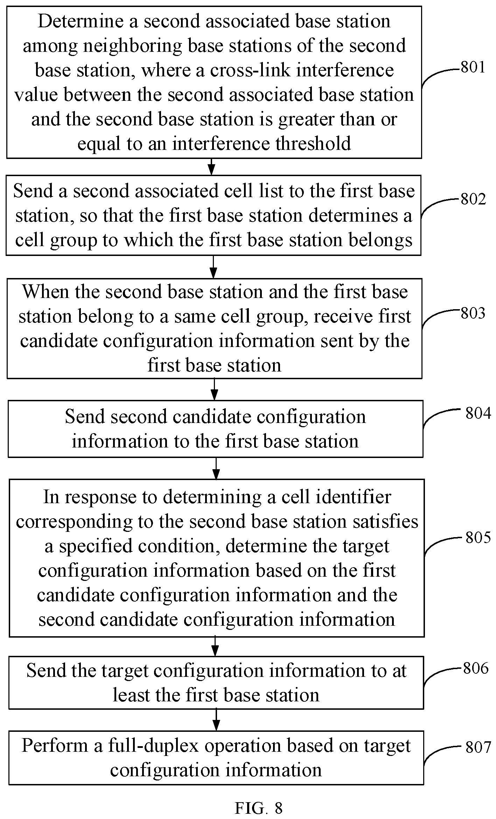

In some optional embodiments, referring to FIG. 8, FIG. 8 is a flowchart of an interference coordination method according to an embodiment, where the method may be performed by a second base station, and the method may include following steps.

In step 801, determining a second associated base station among neighboring base stations of the second base station, where a cross-link interference value between the second associated base station and the second base station is greater than or equal to an interference threshold.

The determining manner is similar to the determining manner of the second associated base station in the above step 601, which will not be repeated here.

In step 802, sending a second associated cell list to the first base station, so that the first base station determines a cell group to which the first base station belongs.

The sending manner is similar to the sending manner of the second associated cell list in the above step 602, which will not be repeated here.

In step 803, when the second base station and the first base station belong to a same cell group, receiving first candidate configuration information sent by the first base station.

In the embodiments of the present disclosure, the first candidate configuration information is used to indicate configuration information of a full-duplex operation expected to be performed by the first base station.

In a possible implementation, the first candidate configuration information may include, but is not limited to, at least one of: first uplink sub-band information of a full-duplex operation expected to be performed by the first base station; a first RSRP list, where the first RSRP list includes a first RSRP value determined by the first base station by measuring a downlink reference signal sent by the second base station to a terminal, and the second base station is a neighboring base station of the first base station; first uplink/downlink time-division duplex configuration information of a full-duplex operation expected to be performed by the first base station; and first transmission direction information of a full-duplex operation expected to be performed by the first base station.

In step 804, sending second candidate configuration information to the first base station.

The second candidate configuration information is used to indicate configuration information of a full-duplex operation expected to be performed by the second base station.

In a possible implementation, the second candidate configuration information includes but is not limited to at least one of: second uplink sub-band information of a full-duplex operation expected to be performed by the third base station; a second RSRP list, where the second RSRP list includes a second RSRP value determined by the third base station by measuring a downlink reference signal sent by a neighboring base station of the third base station to the terminal; second uplink and downlink time division duplex configuration information of the full-duplex operation expected to be performed by the third base station; and second transmission direction information of the full-duplex operation expected to be performed by the third base station.

In step 805, in response to determining a cell identifier corresponding to the second base station satisfies a specified condition, determining the target configuration information based on the first candidate configuration information and the second candidate configuration information.

In a possible implementation, the specified condition is that a cell identifier corresponding to the base station is maximum.

In another possible implementation, the specified condition is that a cell identifier corresponding to the base station is minimum.

Certainly, the specified condition may also be other conditions, which is not limited in the present disclosure.

At this time, the second base station may be taken as the specified base station, and the cell corresponding to the second base station is taken as the anchor cell. The second base station determines the target configuration information based on the first candidate configuration information and the second candidate configuration information, where the target configuration information is used to indicate a cell group to which the first base station belongs, that is, configuration information for performing full-duplex operation by a plurality of base stations in the cell group to which the second base station belongs. A manner of determining the target configuration information is not limited in the present disclosure.

In step 806, sending the target configuration information to at least the first base station.

In the embodiment of the present disclosure, in addition to sending the target configuration information to the first base station, the second base station may further send the target configuration information to another base station other than the first base station in the same cell group.

In step 807, performing a full-duplex operation based on target configuration information.

In the above embodiment, the second base station may be taken as a specified base station to determine the target configuration information, and may further inform other base stations in a same cell group of the target configuration information, and the second base station may perform a full-duplex operation based on the target configuration information, thereby avoiding strong cross-link interference between base stations belonging to the same cell group, and implementing a purpose of coordinating cross-link interference on a base station side.

It should be noted that when the second base station needs to determine the cell group to which the second base station belongs, the second base station may take itself as the first base station, and determine the cell group to which the second base station belongs by using a manner that the first base station determines the cell group to which the first base station belongs, and the specific implementation manner is already described in the first base station side, which will not be repeated here.

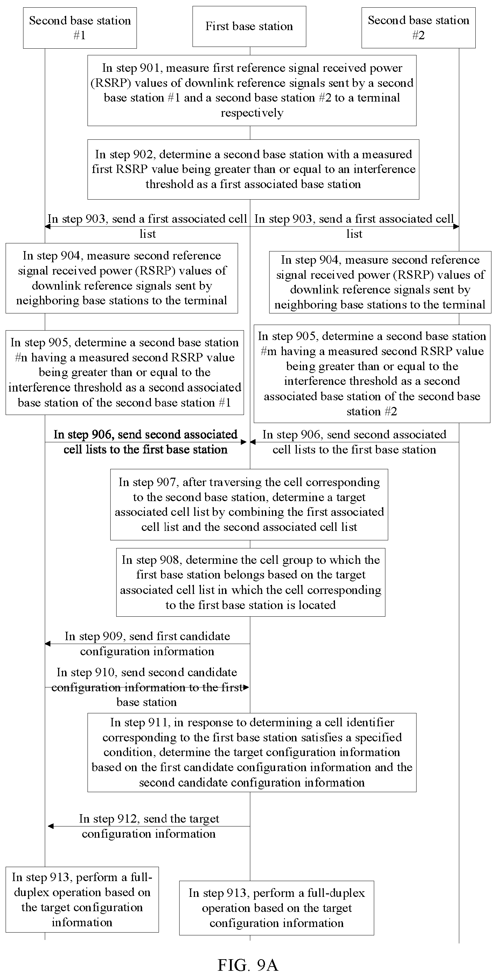

In some optional embodiments, referring to FIG. 9A, FIG. 9A is a flowchart of an interference coordination method according to an embodiment, where there is an inter-base station interface between any two base stations, and the method may include following steps.

In step 901, a first base station measures first reference signal received power (RSRP) values of downlink reference signals sent by a second base station # 1 and a second base station #2 to a terminal respectively.

The second base station #1 and the second base station #2 are neighboring base stations of the first base station, and there may be one or more neighboring base stations, which is not limited in the present disclosure. In FIG. 9A, only the second base station #1 and the second base station #2 are used for illustrative description, and a number of second base stations may be more in actual application.

In step 902, the first base station determines a second base station with a measured first RSRP value being greater than or equal to an interference threshold as a first associated base station.

In step 903, a first associated cell list is sent to the second base station #1 and the second base station #2.

In an embodiment of the present disclosure, the first associated cell list includes a cell corresponding to the first base station and a first associated cell corresponding to the first associated base station.

In step 904, the second base station #1 and the second base station #2 measure second reference signal received power (RSRP) values of downlink reference signals sent by neighboring base stations of the second base station #1 and the second base station #2 to the terminal.

In step 905, the second base station #1 determines a second base station #n having a measured second RSRP value being greater than or equal to the interference threshold as a second associated base station of the second base station # 1.

Similarly, the second base station #2 determines a second base station #m having a measured second RSRP value being greater than or equal to the interference threshold as the second associated base station corresponding to the second base station #2. Where n and m are positive integers.

In step 906, the second base station #1 and the second base station #2 send second associated cell lists to the first base station.

In the embodiment of the present disclosure, the second associated cell list includes a cell corresponding to the second base station # 1 (or the second base station #2) and a second associated cell corresponding to the second associated base station.

In step 907, after traversing the cell corresponding to the second base station, the first base station determines a target associated cell list by combining the first associated cell list and the second associated cell list.

In step 908, the first base station determines the cell group to which the first base station belongs based on the target associated cell list in which the cell corresponding to the first base station is located.

In step 909, the first base station sends first candidate configuration information to the second base station # 1.

There may be one or more base stations belonging to the same cell group as the first base station, and the second base station #1 is used to replace the base stations belonging to the same cell group as the first base station in the present disclosure. The first candidate configuration information is used to indicate configuration information of a full-duplex operation expected to be performed by the first base station.

In step 910, the second base station #1 sends second candidate configuration information to the first base station.

In the embodiments of the present disclosure, the second candidate configuration information is used to indicate configuration information of a full-duplex operation expected to be performed by the third base station.

In step 911, in response to determining a cell identifier corresponding to the first base station satisfies a specified condition, the first base station determines the target configuration information based on the first candidate configuration information and the second candidate configuration information.

In the embodiment of the present disclosure, if a cell identifier corresponding to the second base station #1 meets the specified condition, the second base station #1 may determine the target configuration information based on the first candidate configuration information and the second candidate configuration information. The specified condition is that the cell identifier corresponding to the base station is maximum, or the cell identifier corresponding to the base station is minimum.

In step 912, the first base station sends the target configuration information to the second base station # 1.

In step 913, the first base station performs a full-duplex operation based on the target configuration information, and the second base station #1 performs the full-duplex operation based on the target configuration information.

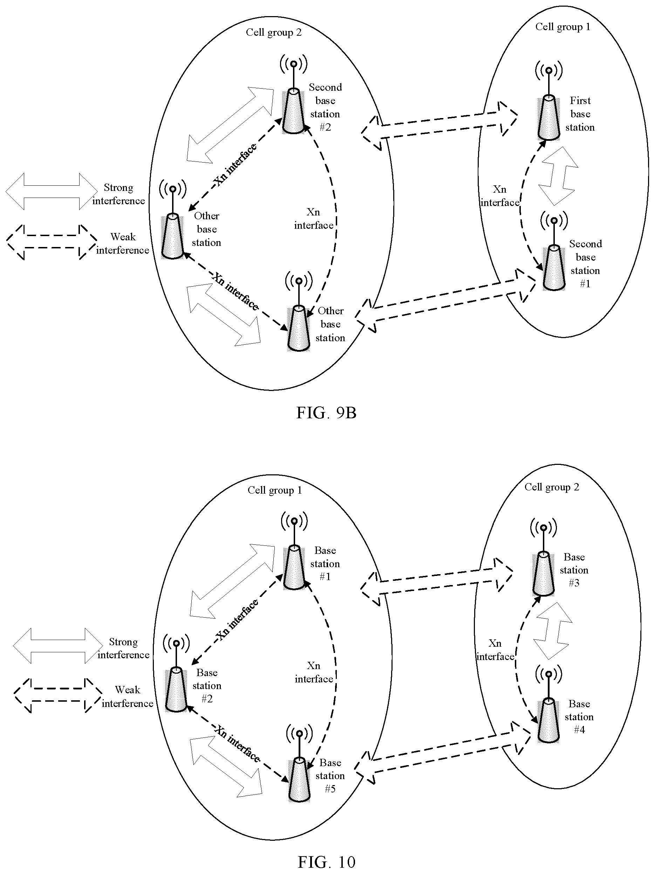

Before cross-link interference coordination, the cross-link interference between the first base station and the second base station #1 is strong, as shown in FIG. 9B. According to the interference coordination method provided by the present disclosure, a plurality of base stations in a same cell group may perform full-duplex operation by using same target configuration information, including but not limited to performing full-duplex operation by using a same TDD structure or a same transmission mode, thereby effectively avoiding strong cross-link interference in a same cell group.

Similarly, interference coordination may be performed in a similar manner for the cell group to which the second base station #2 belongs, so that stronger cross-link interference in a same cell group can be effectively avoided.

In the above embodiment, base stations determine cell groups to which the base stations belong through measurement and interaction, and in each cell group, perform a full-duplex operation by using same target configuration information, thereby avoiding strong cross-link interference between base stations that belong to a same cell group, and implementing a purpose of coordinating cross-link interference on a base station side.

The interference coordination method is further illustratively described as follows.

Referring to FIG. 10, assuming that base stations #1-#5 in a network support full-duplex operation, the base station #1 performs following steps according to the cross-link interference coordination method provided in the present disclosure.

The base station #1 measures first RSRP values of downlink reference signals sent by the base station #2, the base station #3, the base station #4, and the base station #5 to terminals respectively, so as to determine a first associated base station having a first RSRP value being greater than or equal to an interference threshold, and determine a cell corresponding to the first associated base station as a first associated cell.

It is assumed that the base station # 1 determines, based on an interference threshold predefined in a protocol, configured by a core network device, or preconfigured in RRC signaling, that the base station #2 is the first associated base station, that is, cross-link interference between the base station #2 and the base station #1 is strong.

The base station #1 determines the first associated cell list, and at this time, the first associated cell list of the base station #1 is {base station #1, base station #2}.

The base station #1 sends the first associated cell list to the base station #2, the base station #3, the base station #4, and the base station #5 through an inter-base station interface, for example, an Xn interface.

The base station #2 performs following steps according to the cross-link interference coordination method provided in the present disclosure.

The base station #2 measures second RSRP values of downlink reference signals sent by the base station #1, the base station #3, the base station #4, and the base station #5 to terminals respectively, so as to determine a second associated base station having a second RSRP value being greater than or equal to the interference threshold, and determine a cell corresponding to the second associated base station as a second associated cell.

It is assumed that the base station #2 determines, based on the interference threshold predefined in a protocol, configured by a core network device, or preconfigured in RRC signaling, that the base stations #1 and #5 are the second associated base stations, that is, cross-link interference between the base station #2 and the base station #1 is strong, and cross-link interference between the base station #2 and the base station #5 is strong.

The base station #2 determines the second associated cell list, and at this time, the second associated cell list of the base station #2 is {base station #1, base station #2, base station #5 } .

The base station #2 sends the second associated cell list to the base station #1, the base station #3, the base station #4, and the base station #5 through an inter-base station interface, for example, an Xn interface.

The base station #3, the base station #4, and the base station #5 determine second associated cell lists of their own respectively in a manner similar to that of the base station #1 and the base station #2.

It is assumed that the second associated cell list determined by the base station #3 is {base station #3, base station #4}. The second associated cell list determined by the base station #4 is {base station #4}, that is, the second associated cell list includes only the base station #4, which indicates that no base station causes strong cross-link interference to the base station #4. The second associated cell list determined by the base station #5 is {base station #2, base station #5}.

The base station #3, the base station #4, and the base station #5 respectively send the second associated cell lists determined by the base station #3, the base station #4, and the base station #5 to the other four base stations through the Xn interface.

After traversing its own neighboring base stations, each base station may combine the first associated cell list determined by itself and the received second associated cell lists sent by other base stations to determine the target associated cell list. Taking base station #1 as an example, two target associated cell lists are obtained after combining the above associated cell lists, where list 1 is {base station #1, base station #2, base station #5}, and list 2 is {base station #3, base station #4}.

In the embodiment of the present disclosure, two cell groups may be determined, where a cell group 1 includes cells corresponding to the base station #1, the base station #2, and the base station #5, and a cell group 2 includes cells corresponding to a base station #3 and a base station #4.

Using the base station #1 as an example, the base station #1 needs to exchange the first candidate configuration information and the second candidate configuration information with other base stations in the cell group 1, that is, the base station #2 and the base station #5, through an inter-base station interface, for example, an Xn interface. The first candidate configuration information is used to indicate configuration information of a full-duplex operation expected to be performed by the base station #1, the second candidate configuration information 1 is used to indicate configuration information of a full-duplex operation expected to be performed by the base station #2, and the second candidate configuration information 2 is used to indicate configuration information of a full-duplex operation expected to be performed by the base station #5.

All of the base station #1, the base station #2 and the base station #5 in the cell group 1 may perform a full-duplex operation based on the target configuration information of the cell group 1.

Similarly, the base station #3 and the base station #4 in the cell group 2 perform a full-duplex operation based on the target configuration information corresponding to the cell group 2.

In the above embodiment, when a plurality of base stations belonging to a same cell group all perform full-duplex operation by using same target configuration information, strong cross-link interference may be avoided between base stations belonging to the same cell group, and a purpose of coordinating cross-link interference is implemented on a base station side.

In some optional embodiments, for the above embodiment, still taking the base station #1 as an example, the base station #1 sends the first candidate configuration information of the base station #1 to the base station #2 and the base station #5. The first candidate configuration information includes at least one of: first uplink sub-band information of a full-duplex operation expected to be performed by the base station # 1; a first RSRP list, where the first RSRP list includes first RSRP values determined by the base station #1 by measuring downlink reference signals sent by the base station #2 to the base station #5 to terminals; first uplink and downlink time division duplex configuration information of a full-duplex operation expected to be performed by the base station #1; or first transmission direction information of a full-duplex operation expected to be performed by the base station #1.

Similarly, the base station #1 receives the second candidate configuration information sent by the base station #2 and the base station #5 respectively. The second candidate configuration information includes at least one of: second uplink sub-band information of a full-duplex operation expected to be performed by the base station #2 (or the base station #5); a second RSRP list, where the second RSRP list includes second RSRP values determined by the base station #2 (or the base station #5) by measuring downlink reference signals sent by neighboring base stations of the base station #2 (or the base station #5) to the terminal; second uplink and downlink time division duplex configuration information of a full-duplex operation expected to be performed by the base station #2 (or the base station #5); and second transmission direction information of a full-duplex operation expected to be performed by the base station #2 (or the base station #5).

In this embodiment, the final target configuration information adopted in the cell group 1 is determined by a specified base station in the group. The specified base station refers to that the cell identifier corresponding to the base station meets a specified condition, and the specified condition is that the cell identifier corresponding to the base station is maximum or the cell identifier corresponding to the base station is the minimum.

Optionally, the specified condition may be preconfigured, or may be agreed based on a protocol, which is not limited in the present disclosure.

Only the specified base station can send the target configuration information to other base stations in the group through the Xn interface. The target configuration information includes at least one of the following: target uplink sub-band information when multiple base stations in the cell group 1 perform the full-duplex operation; target uplink and downlink time division duplex configuration information when multiple base stations in the cell group 1 perform the full-duplex operation; or target transmission direction information when multiple base stations in the cell group 1 perform the full-duplex operation.

Assuming that base station #1 is taken as a specified base station, target configuration information of cell group 1 may be sent to base station #2 and base station #5.

Finally, all the base station #1, the base station #2, and the base station #5 may perform a full-duplex operation based on the target configuration information of the cell group 1.

For the cell group 2, target configuration information of the cell group 2 may be determined in a similar manner, and then both the base station #3 and the base station #4 may perform a full-duplex operation based on the target configuration information of the cell group 2.

In the above embodiment, the target configuration information may be determined by a specified base station in a same cell group, so that multiple base stations perform a full-duplex operation based on the target configuration information in the same cell group. Strong cross-link interference between base stations belonging to a same cell group can be avoided, and a purpose of coordinating the cross-link interference is achieved at a base station side.

Corresponding to the above embodiment of the application function implementation method, the present disclosure further provides embodiments of an application function implementation apparatus.

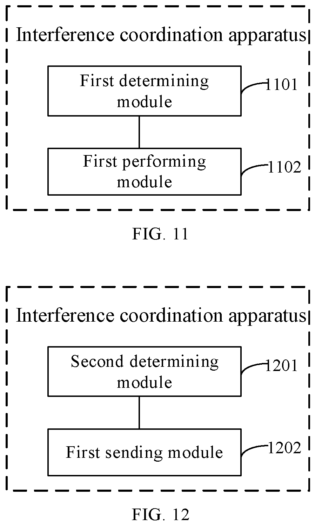

Referring to FIG. 11, FIG. 11 is a block diagram of an interference coordination apparatus according to an exemplary embodiment, where the apparatus is applied in a first base station, and the apparatus includes:
a first determining module 1101, configured to determine a cell group to which the first base station belongs; where cross-link interference coordination needs to be performed between base stations belonging to the same cell group;
a first performing module 1102, configured to perform a full-duplex operation based on target configuration information; where the target configuration information is used to indicate configuration information for the base stations in the cell group to which the first base station belongs to perform the full-duplex operation.

In some optional embodiments, the first determining module includes:
a first determining sub-module, configured to determine a first associated base station; where the first associated base station is a base station among second base stations, a cross-link interference value between the first associated base station and the first base station is greater than or equal to an interference threshold, and a second base station is a neighboring base station of the first base station;
a first sending sub-module, configured to send a first associated cell list to the second base station; where the first associated cell list includes a cell corresponding to the first base station and a first associated cell corresponding to the first associated base station;
a first receiving sub-module, configured to receive a second associated cell list sent by the second base station; where the second associated cell list includes a cell corresponding to the second base station and a second associated cell corresponding to a second associated base station, the second associated base station is a base station among neighboring base stations of the second base station, and a cross-link interference value between the second associated base station and the second base station is greater than or equal to the interference threshold;
a combining sub-module, configured to, after traversing the cell corresponding to the second base station, determine a target associated cell list by combining the first associated cell list and the second associated cell list; and
a second determining sub-module, configured to determine the cell group to which the first base station belongs based on the target associated cell list in which the cell corresponding to the first base station is located.

In some optional embodiments, the combining sub-module includes any one of:
a first traversing unit, configured to traverse the cell corresponding to the second base station based on an ascending order of cell identifiers; or
a second traversing unit, configured to traverse the cell corresponding to the second base station based on a descending order of cell identifiers.

In some optional embodiments, the apparatus further includes:
a measuring module, configured to measure a first reference signal receiving power (RSRP) value of a downlink reference signal sent by the second base station to a terminal;
the first determining module includes:
   a third determining sub-module, configured to determine the second base station with the first RSRP value greater than or equal to the interference threshold as the first associated base station.

In some optional embodiments, the apparatus further includes any one of:
a third determining module, configured to determine the interference threshold based on a protocol agreement;
a fourth determining module, configured to determine the interference threshold based on configuration information used to configure the interference threshold sent by a core network device; or
a fifth determining module, configured to configure the interference threshold through radio resource control (RRC) signaling.

In some optional embodiments, the apparatus further includes:
a second sending module, configured to send first candidate configuration information to a third base station; where the third base station is a base station belonging to the same cell group as the first base station, and the first candidate configuration information is used to indicate configuration information of a full-duplex operation expected to be performed by the first base station;
a first receiving module, configured to receive second candidate configuration information sent by the third base station; where the second candidate configuration information is used to indicate configuration information of a full-duplex operation expected to be performed by the third base station;
a second receiving module, configured to receive the target configuration information sent by a specified base station; where the specified base station is a base station in the cell group to which the first base station belongs with a corresponding cell identifier satisfying a specified condition.

In some optional embodiments, the apparatus further includes:
a third sending module, configured to send first candidate configuration information to a third base station; where the third base station is a base station belonging to the same cell group as the first base station, and the first candidate configuration information is used to indicate configuration information of a full-duplex operation expected to be performed by the first base station;
a third receiving module, configured to receive second candidate configuration information sent by the third base station; where the second candidate configuration information is used to indicate configuration information of a full-duplex operation expected to be performed by the third base station;
a sixth determining module, configured to, in response to determining a cell identifier corresponding to the first base station satisfies a specified condition, determine the target configuration information based on the first candidate configuration information and the second candidate configuration information; and
a fourth sending module, configured to send the target configuration information to the third base station.

In some optional embodiments, the specified condition is that the cell identifier corresponding to the base station is maximum, or the cell identifier corresponding to the base station is minimum.

In some optional embodiments, the first candidate configuration information includes at least one of:
first uplink sub-band information of a full-duplex operation expected to be performed by the first base station;
a first reference signal receiving power (RSRP) list, where the first RSRP list includes a first RSRP value determined by the first base station by measuring a downlink reference signal sent by the second base station to a terminal, and the second base station is a neighboring base station of the first base station;
first uplink and downlink time division duplex configuration information of a full-duplex operation expected to be performed by the first base station; or
first transmission direction information of a full-duplex operation expected to be performed by the first base station.

In some optional embodiments, the second candidate configuration information includes at least one of:
second uplink sub-band information of a full-duplex operation expected to be performed by the third base station;
a second RSRP list, where the second RSRP list includes a second RSRP value determined by the third base station by measuring a downlink reference signal sent by a neighboring base station of the third base station to a terminal;
second uplink and downlink time division duplex configuration information of a full-duplex operation expected to be performed by the third base station; or
second transmission direction information of a full-duplex operation expected to be performed by the third base station.

In some optional embodiments, the target candidate configuration information includes at least one of:
target uplink sub-band information for the base stations in the cell group to which the first base station belongs to perform the full-duplex operation;
target uplink and downlink time division duplex configuration information for the base stations in the cell group to which the first base station belongs to perform the full-duplex operation; or
target transmission direction information for the base stations in the cell group to which the first base station belongs to perform the full-duplex operation.

Referring to FIG. 12, FIG. 12 is a block diagram of an interference coordination apparatus according to an exemplary embodiment, where the apparatus is applied in a second base station, and the apparatus includes:
a second determining module 1201, configured to determine a second associated base station among neighboring base stations of the second base station, where a cross-link interference value between the second associated base station and the second base station is greater than or equal to an interference threshold; and
a first sending module 1202, configured to send a second associated cell list to a first base station, so that the first base station determines a cell group to which the first base station belongs; where the first base station is a neighboring base station of the second base station, and the second associated cell list includes a cell corresponding to the second base station and a second associated cell corresponding to the second associated base station.

In some optional embodiments, the apparatus further includes any one of:
a seventh determining module, configured to determine the interference threshold based on a protocol agreement;
an eighth determining module, configured to determine the interference threshold based on configuration information used to configure the interference threshold sent by a core network device; or
a ninth determining module, configured to configure the interference threshold through radio resource control (RRC) signaling.

In some optional embodiments, the apparatus further includes:
a fourth receiving module, configured to, when the second base station and the first base station belong to the same cell group, receive first candidate configuration information sent by the first base station; where the first candidate configuration information is used to indicate configuration information of a full-duplex operation expected to be performed by the first base station;
a fifth sending module, configured to send second candidate configuration information to the first base station; where the second candidate configuration information is used to indicate configuration information of a full-duplex operation expected to be performed by the second base station;
a fifth receiving module, configured to receive target configuration information sent by a specified base station; where the specified base station is a base station in the cell group to which the first base station belongs with a corresponding cell identifier satisfying a specified condition, and the target configuration information is used to indicate configuration information for base stations in the cell group to which the first base station belongs to perform a full-duplex operation.

In some optional embodiments, the apparatus further includes:
a sixth receiving module, configured to, when the second base station and the first base station belong to the same cell group, receive first candidate configuration information sent by the first base station; where the first candidate configuration information is used to indicate configuration information of a full-duplex operation expected to be performed by the first base station;
a sixth sending module, configured to send second candidate configuration information to the first base station; where the second candidate configuration information is used to indicate configuration information of a full-duplex operation expected to be performed by the second base station;
a tenth determining module, configured to, in response to determining a cell identifier corresponding to the second base station satisfies a specified condition, determine target configuration information based on the first candidate configuration information and the second candidate configuration information; where the target configuration information is used to indicate configuration information for base stations in the cell group to which the first base station belongs to perform a full-duplex operation; and
a seventh sending module, configured to send the target configuration information to at least the first base station.

In some optional embodiments, the apparatus further includes:
a second performing module, configured to perform the full-duplex operation based on the target configuration information.

In some optional embodiments, the specified condition is that the cell identifier corresponding to the base station is maximum, or the cell identifier corresponding to the base station is minimum.

In some optional embodiments, the first candidate configuration information includes at least one of:
first uplink sub-band information of a full-duplex operation expected to be performed by the first base station;
a first reference signal receiving power (RSRP) list, where the first RSRP list includes a first RSRP value determined by the first base station by measuring a downlink reference signal sent by the second base station to a terminal;
first uplink and downlink time division duplex configuration information of a full-duplex operation expected to be performed by the first base station; or
first transmission direction information of a full-duplex operation expected to be performed by the first base station.

In some optional embodiments, the second candidate configuration information includes at least one of:
second uplink sub-band information of a full-duplex operation expected to be performed by the second base station;
a second RSRP list, where the second RSRP list includes a second RSRP value determined by the second base station by measuring a downlink reference signal sent by a neighboring base station of the second base station to a terminal;
second uplink and downlink time division duplex configuration information of a full-duplex operation expected to be performed by the second base station; or
second transmission direction information of a full-duplex operation expected to be performed by the second base station.

In some optional embodiments, the target candidate configuration information includes at least one of:
target uplink sub-band information for the base stations in the cell group to which the first base station belongs to perform the full-duplex operation;
target uplink and downlink time division duplex configuration information for the base stations in the cell group to which the first base station belongs to perform the full-duplex operation; or
target transmission direction information for the base stations in the cell group to which the first base station belongs to perform the full-duplex operation.

For the apparatus embodiment, since it basically corresponds to the method embodiment, related description can be referred from part of the method embodiment. The apparatus embodiments described above are merely illustrative, where the units described above as separate components may or may not be physically separate, and the components displayed as units may or may not be physical units, that is, may be located in one place, or may be distributed on multiple network units. Some or all of the modules may be selected according to actual needs to achieve the purpose of the present disclosure. Those skilled in the art can understand and implement the present disclosure without making creative efforts.

Correspondingly, the present disclosure further provides a computer-readable storage medium, where the storage medium stores a computer program, and the computer program is configured to perform the interference coordination method used for the first base station side.

Correspondingly, the present disclosure further provides a computer-readable storage medium, where the storage medium stores a computer program, and the computer program is configured to perform the interference coordination method used for the second base station side.

Correspondingly, the present disclosure further provides an interference coordination apparatus, including:
a processor; and
a memory for storing a processor-executable instruction;
the processor is configured to perform any one of the interference coordination method on the first base station side.

Correspondingly, the present disclosure further provides an interference coordination apparatus, including:
a processor; and
a memory for storing a processor-executable instruction;
the processor is configured to perform any one of the interference coordination method on the second base station side.

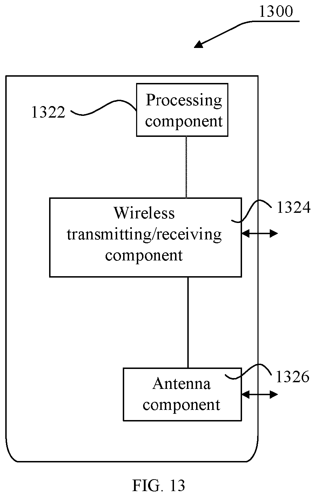

FIG. 13 is a schematic structural diagram of an interference coordination device 1300 according to an exemplary embodiment. The device1300 may be provided as a base station, and the base station herein may be the first base station or the second base station described above. Referring to FIG. 13, the device 1300 includes a processing component 1322, a wireless transmitting/receiving component 1324, an antenna component 1326, and a signal processing part specific to a wireless interface, and the processing component 1322 may further include at least one processor.

A processor in the processing component 1322 may be configured to perform the interference coordination method described in any one of the above.

Other embodiments of the present disclosure will be readily apparent to those skilled in the art upon consideration of the specification and practice of the disclosure herein. The present disclosure is intended to cover any variations, uses, or adaptations of the present disclosure that follow the general principles of the disclosure and include common knowledge or conventional technical means in the art not disclosed in the disclosure. The specification and embodiments are to be regarded as exemplary only, and the true scope and spirit of the present disclosure are indicated by the following claims.

It should be understood that the present disclosure is not limited to the precise structures already described above and shown in the accompanying drawings, and various modifications and changes may be made without departing from the scope thereof. The scope of the present disclosure is limited only by the appended claims.

## Claims

1. An interference coordination method, performed by a first base station, comprising:
determining a cell group to which the first base station belongs; wherein cross-link interference coordination needs to be performed between base stations belonging to a same cell group; and
performing a full-duplex operation based on target configuration information; wherein the target configuration information is used to indicate configuration information for the base stations in the cell group to which the first base station belongs to perform the full-duplex operation.

2. The method according to claim 1, wherein determining the cell group to which the first base station belongs comprises:
determining a first associated base station; wherein the first associated base station is a base station among second base stations, a cross-link interference value between the first associated base station and the first base station is greater than or equal to an interference threshold, and the second base stations are neighboring base stations of the first base station;
sending a first associated cell list to the second base stations; wherein the first associated cell list comprises a cell corresponding to the first base station and a first associated cell corresponding to the first associated base station;
receiving second associated cell lists sent by the second base stations; wherein for each of the second associated cell lists, the second associated cell list comprises a cell corresponding to one of the second base stations and a second associated cell corresponding to a second associated base station, the second associated base station is a base station among neighboring base stations of the one of the second base stations, and a cross-link interference value between the second associated base station and the one of the second base stations is greater than or equal to the interference threshold;
after traversing cells corresponding to the second base stations, determining a target associated cell list by combining the first associated cell list and the second associated cell lists; and
determining the cell group to which the first base station belongs based on the target associated cell list in which the cell corresponding to the first base station is located.

3. The method according to claim 2, wherein traversing the cells corresponding to the second base stations comprises any one of:
traversing the cells corresponding to the second base stations based on an ascending order of cell identifiers; or
traversing the cells corresponding to the second base stations based on a descending order of cell identifiers.

4. The method according to claim 2, wherein the method further comprises:
measuring first reference signal receiving power, RSRP, values of downlink reference signals sent by the second base stations to terminals;
determining the first associated base station comprises:
determining the second base station with the first RSRP value greater than or equal to the interference threshold as the first associated base station.

5. The method according to any one of claims 2-4, wherein the method further comprises any one of:
determining the interference threshold based on a protocol agreement;
determining the interference threshold based on configuration information used to configure the interference threshold sent by a core network device; or
configuring the interference threshold through radio resource control, RRC, signaling.

6. The method according to claim 1, wherein the method further comprises:
sending first candidate configuration information to a third base station; wherein the third base station is a base station belonging to a same cell group as the first base station, and the first candidate configuration information is used to indicate configuration information of the full-duplex operation expected to be performed by the first base station;
receiving second candidate configuration information sent by the third base station; wherein the second candidate configuration information is used to indicate configuration information of the full-duplex operation expected to be performed by the third base station; and
receiving the target configuration information sent by a specified base station; wherein the specified base station is a base station in the cell group to which the first base station belongs with a corresponding cell identifier satisfying a specified condition.

7. The method according to claim 1, wherein the method further comprises:
sending first candidate configuration information to a third base station; wherein the third base station is a base station belonging to a same cell group as the first base station, and the first candidate configuration information is used to indicate configuration information for performing the full-duplex operation expected to be performed by the first base station;
receiving second candidate configuration information sent by the third base station; wherein the second candidate configuration information is used to indicate configuration information for performing the full-duplex operation expected to be performed by the third base station;
in response to determining a cell identifier corresponding to the first base station satisfies a specified condition, determining the target configuration information based on the first candidate configuration information and the second candidate configuration information; andsending the target configuration information to the third base station.

8. The method according to claim 6 or 7, wherein the specified condition is that the cell identifier corresponding to the base station is maximum, or the cell identifier corresponding to the base station is minimum.

9. The method according to claim 6 or 7, wherein the first candidate configuration information comprises at least one of:
first uplink sub-band information of the full-duplex operation expected to be performed by the first base station;
a first RSRP list, wherein the first RSRP list comprises first RSRP values determined by the first base station by measuring downlink reference signals sent by second base stations to terminals, and the second base stations are neighboring base stations of the first base station;
first uplink and downlink time division duplex configuration information of the full-duplex operation expected to be performed by the first base station; or
first transmission direction information of the full-duplex operation expected to be performed by the first base station.

10. The method according to claim 6 or 7, wherein the second candidate configuration information comprises at least one of:
second uplink sub-band information of the full-duplex operation expected to be performed by the third base station;
a second RSRP list, wherein the second RSRP list comprises second RSRP values determined by the third base station by measuring downlink reference signals sent by neighboring base stations of the third base station to terminals;
second uplink and downlink time division duplex configuration information of the full-duplex operation expected to be performed by the third base station; or
second transmission direction information of the full-duplex operation expected to be performed by the third base station.

11. The method according to claim 6 or 7, wherein the target candidate configuration information comprises at least one of:
target uplink sub-band information for the base stations in the cell group to which the first base station belongs to perform the full-duplex operation;
target uplink and downlink time division duplex configuration information for the base stations in the cell group to which the first base station belongs to perform the full-duplex operation; or
target transmission direction information for the base stations in the cell group to which the first base station belongs to perform the full-duplex operation.

12. An interference coordination method, performed by a second base station, comprising:
determining a second associated base station among neighboring base stations of the second base station, wherein a cross-link interference value between the second associated base station and the second base station is greater than or equal to an interference threshold; and
sending a second associated cell list to a first base station, so that the first base station determines a cell group to which the first base station belongs; wherein the first base station is a neighboring base station of the second base station, and the second associated cell list comprises a cell corresponding to the second base station and a second associated cell corresponding to the second associated base station.

13. The method according to claim 12, further comprising any one of:
determining the interference threshold based on a protocol agreement;
determining the interference threshold based on configuration information used to configure the interference threshold sent by a core network device; or
configuring the interference threshold through radio resource control, RRC, signaling.

14. The method according to claim 12, wherein the method further comprises:
when the second base station and the first base station belong to a same cell group, receiving first candidate configuration information sent by the first base station; wherein the first candidate configuration information is used to indicate configuration information of a full-duplex operation expected to be performed by the first base station;
sending second candidate configuration information to the first base station; wherein the second candidate configuration information is used to indicate configuration information of a full-duplex operation expected to be performed by the second base station; and
receiving target configuration information sent by a specified base station; wherein the specified base station is a base station in the cell group to which the first base station belongs with a corresponding cell identifier satisfying a specified condition, and the target configuration information is used to indicate configuration information for base stations in the cell group to which the first base station belongs to perform a full-duplex operation.

15. The method according to claim 12, wherein the method further comprises:
when the second base station and the first base station belong to a same cell group, receiving first candidate configuration information sent by the first base station; wherein the first candidate configuration information is used to indicate configuration information of a full-duplex operation expected to be performed by the first base station;
sending second candidate configuration information to the first base station; wherein the second candidate configuration information is used to indicate configuration information of a full-duplex operation expected to be performed by the second base station;
in response to determining a cell identifier corresponding to the second base station satisfies a specified condition, determining target configuration information based on the first candidate configuration information and the second candidate configuration information; wherein the target configuration information is used to indicate configuration information for base stations in the cell group to which the first base station belongs to perform a full-duplex operation; and
sending the target configuration information to at least the first base station.

16. The method according to claim 14 or 15, wherein the method further comprises:
performing the full-duplex operation based on the target configuration information.

17. The method according to claim 14 or 15, wherein the specified condition is that the cell identifier corresponding to the base station is maximum, or the cell identifier corresponding to the base station is minimum.

18. The method according to claim 14 or 15, wherein the first candidate configuration information comprises at least one of:
first uplink sub-band information of the full-duplex operation expected to be performed by the first base station;
a first reference signal receiving power, RSRP, list, wherein the first RSRP list comprises a first RSRP value determined by the first base station by measuring a downlink reference signal sent by the second base station to a terminal;
first uplink and downlink time division duplex configuration information of the full-duplex operation expected to be performed by the first base station; or
first transmission direction information of the full-duplex operation expected to be performed by the first base station.

19. The method according to claim 14 or 15, wherein the second candidate configuration information comprises at least one of:
second uplink sub-band information of the full-duplex operation expected to be performed by the second base station;
a second RSRP list, wherein the second RSRP list comprises a second RSRP value determined by the second base station by measuring a downlink reference signal sent by a neighboring base station of the second base station to a terminal;
second uplink and downlink time division duplex configuration information of the full-duplex operation expected to be performed by the second base station; or
second transmission direction information of the full-duplex operation expected to be performed by the second base station.

20. The method according to claim 14 or 15, wherein the target candidate configuration information comprises at least one of:
target uplink sub-band information for the base stations in the cell group to which the first base station belongs to perform the full-duplex operation;
target uplink and downlink time division duplex configuration information for the base stations in the cell group to which the first base station belongs to perform the full-duplex operation; or
target transmission direction information for the base stations in the cell group to which the first base station belongs to perform the full-duplex operation.

21. An interference coordination apparatus, applied to a first base station, comprising:
a first determining module, configured to determine a cell group to which the first base station belongs; wherein cross-link interference coordination needs to be performed between base stations belonging to a same cell group; and
a first performing module, configured to perform a full-duplex operation based on target configuration information; wherein the target configuration information is used to indicate configuration information for the base stations in the cell group to which the first base station belongs to perform the full-duplex operation.

22. An interference coordination apparatus, applied to a second base station, comprising:
a second determining module, configured to determine a second associated base station among neighboring base stations of the second base station, wherein a cross-link interference value between the second associated base station and the second base station is greater than or equal to an interference threshold; and
a first sending module, configured to send a second associated cell list to a first base station, so that the first base station determines a cell group to which the first base station belongs; wherein the first base station is a neighboring base station of the second base station, and the second associated cell list comprises a cell corresponding to the second base station and a second associated cell corresponding to the second associated base station.

23. A computer-readable storage medium, wherein the storage medium stores a computer program used to perform the interference coordination method according to any one of claims 1-11.

24. A computer-readable storage medium, wherein the storage medium stores a computer program used to perform the interference coordination method according to any one of claims 12-20.

25. An interference coordination device, comprising:
a processor; and
a memory for storing a processor-executable instruction;
wherein the processor is configured to perform the interference coordination method according to any one of claims 1-11.

26. An interference coordination device, comprising:
a processor; and
a memory for storing a processor-executable instruction;
wherein the processor is configured to perform the interference coordination method according to any one of claims 12-20.
